# EUROPÄISCHE PATENTANMELDUNG

(11) **EP 2 629 130 A1**
(43) Veröffentlichungstag der Anmeldung: **21.08.2013**
(21) Anmeldenummer: 13153779.7
(22) Anmeldetag: 03.02.2013
(51) Int. Cl.: G02B 7/34

(54) **Verfahren für eine Autofokuseinrichtung**

(30) Priorität: 16.02.2012 DE 102012003127
(71) Anmelder: Leica Camera AG, 35606 Solms (DE)
(72) Erfinder: Fingel, Oliver, 47608 Geldern (DE)
(74) Vertreter: Stamer, Jan

(57) **Zusammenfassung**

Ein Verfahren für eine Autofokuseinrichtung mit Pupillenteilung der Abbildung des Objektraumes und Phasendifferenzmessung an zwei auf einem ortsauflösenden fotoempfindlichen Flächensensor abgebildeten Pupillenbildern des Objektraumes zeichnet sich dadurch aus, dass
a) ein Testbild mit vorgegebener Anordnung von Bildpunkten nach Pupillenteilung auf getrennte Bildfelder eines gemeinsamen Flächensensors abgebildet wird,
b) die absoluten Ortskoordinaten der Bildpunkte des einen Pupillenbildes des Testbildes relativ zu den absoluten Ortskoordinaten gleicher Bildpunkte des anderen Pupillenbildes des Testbildes bestimmt werden und daraus
c) die relativen Ortskoordinaten-Abweichungen zwischen den Bildpunkten des einen Pupillenbildes des Testbildes und denen des anderen Pupillenbildes ermittelt und in einem nicht flüchtigen Speicher abgelegt werden und
d) zur Phasendifferenzmessung die Bildpunkte des Objektraumes auf dem Flächensensor des einen Pupillenbildes mit den nach Korrektur mit den gespeicherten Ortskoordinaten-Abweichungen ermittelten Bildpunkten auf dem Flächensensor des anderen Pupillenbildes verglichen werden.

## Beschreibung

Die Erfindung betrifft ein Verfahren für eine Autofokuseinrichtung mit den Merkmalen des Oberbegriffs des Anspruchs 1.

Ein Autofokussystem, das nach dem Pupillenteilungsverfahren mit Phasendifferenzmessung arbeitet, ist z.B. aus DE 39 28 549 C2 bekannt. Durch Aufteilung der Pupille des den Objektraum abbildenden Objektivs und nachfolgende getrennte Abbildungssysteme werden den Pupillenteilen zugeordnete gleiche Bilder auf einem ortsauflösenden fotoempfindlichen Sensor erzeugt. Die Phasenlage der Pupillenbilder zueinander wird gemessen. Durch automatische Verstellung des Objektivs wird die Phasendifferenz auf Null abgeglichen und damit eine automatische Fokussierung erreicht.

Das Verfahren setzt eine gleichmäßige geometrische Ausrichtung der beiden Pupillenbilder zu den lichtempfindlichen Sensoren voraus. Der mechanische Aufwand für die dazu erforderliche Ausrichtung der Pupillenbilder ist erheblich. In der genannten Druckschrift werden die Pupillenteilbilder daher auf getrennte Bereiche eines gemeinsamen Flächensensors abgebildet. Gegenüber einem Zeilensensor bietet ein Flächensensor den zusätzlichen Vorteil, dass zur Ermittlung der Schärfenlage eines Bildes die Pixel einer Fläche aus den beiden Pupillenbildern miteinander verglichen werden können, wodurch aufgrund des höheren Informationsgehalts die Genauigkeit der Fokuslagenberechnung gesteigert wird.

Durch Fehljustierung der die Pupillenbilder erzeugenden optischen Elemente können jedoch zusätzliche Fehler entstehen, so dass beim Auslesen äquivalenter Sensorbereiche tatsächlich unterschiedliche Pupillenbilder hinsichtlich ihrer Phasendifferenz zur Fokusbestimmung herangezogen werden, wodurch eine fehlerhafte Autofokussierung bei nicht orthogonal zur Sensorzeile stehenden Strukturen erfolgt.

Der Erfindung lag daher die Aufgabe zugrunde, den Phasenabgleich ohne zusätzlichen mechanischen Justieraufwand zu verbessern.

Diese Aufgabe wird erfindungsgemäß durch die kennzeichnenden Merkmale des Anspruchs 1 gelöst. Vorteilhafte Weiterbildungen ergeben sich aus den Merkmalen der Unteransprüche.

Mit der Abbildung eines Testbildes mit individuell erkennbaren Strukturelementen kann die korrekte Lage der einander äquivalenten Pupillenbilder zueinander auf den beiden Sensorfeldern erkannt und damit eine Kalibrierung des Autofokussensors durchgeführt werden. Einem Pixel des Pupillenbildes auf dem einen Sensorfeld wird das äquivalente Pixel auf dem anderen Pupillenbild zugeordnet. Die damit ermittelten Ablagewerte werden in einem nicht flüchtigen Speicher als Kalibrationswerte abgelegt. Damit wird sichergestellt, dass bei dem Phasenvergleich die für die Korrelation notwendigen gleichen Bildausschnitte herangezogen werden können und die Bestimmung der Fokuslage über die Korrelationsrechnung der Teilbilder stets richtig erfolgt.

Neben der durch optische Dejustierung der abbildenden Elemente des Autofokussensors entstehenden Fehlfokussierung besteht eine weitere Fehlermöglichkeit in der Farbabhängigkeit der Abbildung der Pupillenbilder. Die erfindungsgemäße Kalibrierung des Autofokussensors durch Abbildung eines Testbildes kann daher vorteilhaft dadurch erweitert werden, dass die Kalibrierung mit Testbildern unterschiedlicher Farbe durchgeführt wird. Durch eine zusätzliche Messung des vorherrschenden Farbspektrums im Objektraum können dann bei der Phasendifferenzmessung die zugehörigen farbabhängigen Kalibrationswerte bei der Zuordnung der gleichen Bildausschnitte berücksichtigt werden.

Die über die Abbildung des Testbildes pixelweise ermittelten Ablagewerte müssen bei der Autofokussierung auf alle Pixel des kalibrierten Flächensensors angewendet werden. In einer bevorzugten Weiterbildung kann aus den am Testbild ermittelten Kalibrationswerten ein gemittelter Verschiebevektor nach Richtung und Länge zur Zuordnung äquivalenter Pixel in den Pupillenbildern gebildet und für den Abruf bei der Phasendifferenzmessung abgelegt werden.

Aus der vorstehend genannten Druckschrift ist an sich auch eine flexible Auswahl der Autofokus-Messfelder nach Größe und Lage auf dem Flächensensor bekannt. Der Anwender kann ein zu fokussierendes Objekt in Größe und Lage im Bildausschnitt frei auswählen und hiermit die Autofokusmessung für ausgewählte Bildbereiche gezielt steuern. Die Ansteuerung des Autofokusfeldes kann mit einem Touch Screen erfolgen und auf dem Touch Screen oder in einem elektronischen Sucher angezeigt werden.

Als lichtempfindliche Flächensensoren sind für die erfindungsgemäße Anwendung CCD oder CMOS Image Sensoren vorteilhaft, die in neueren Ausführungen auch in lichtschwachen Umgebungen gut funktionieren. Vorteilhaft bei den CMOS Sensoren ist die Eigenschaft, dass bevorzugte Flächenbereiche ausgewählt werden können und nur diese für die weitere Berechnung der Fokuslage herangezogen werden. Dies erhöht die Schnelligkeit beim Auslesen und Korrelieren der Bildinformationen.

Anhand der Zeichnung wird das Verfahren beispielhaft beschrieben. In den Figuren sind ein Testbild und unterschiedliche Messbereiche auf einem ortsauflösenden Flächensensor schematisch dargestellt. Es zeigen
- Fig.1: ein aus fünf Strukturelementen bestehendes Testbild,
- Fig.2: die Lage der Testbilder auf unterschiedlichen Teilbereichen eines gemeinsamen Flächensensors,
- Fig.3: maximale Messfelder in den Pupillenbegrenzungen,
- Fig.4: ausgewählte kleine Messfelder innerhalb der Pupillenbegrenzungen,
- Fig.5: eine Testbildverschiebung für das Lichtspektrum blau,
- Fig.6: eine Testbildverschiebung für das Lichtspektrum grün und
- Fig.7: eine Testbildverschiebung für das Lichtspektrum rot.

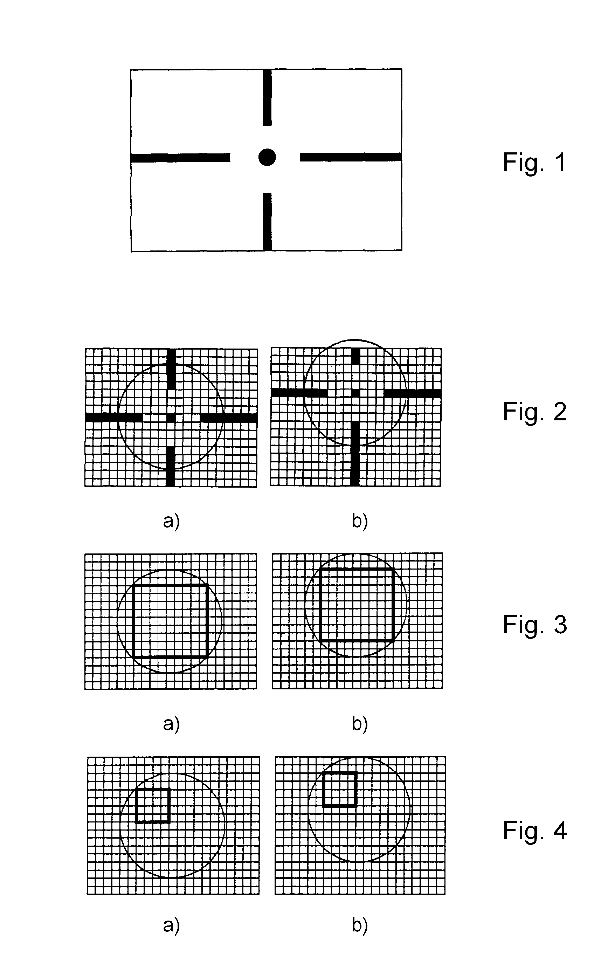

Das in Fig. 1 dargestellte Testbild besteht aus einem zentralen Punkt und vier symmetrisch dazu und rechtwinklig zueinander stehenden Balken. Der zentrale Punkt erlaubt die Definition eines Koordinatenbezugspunktes in einem rechtwinkligen Koordinatensystem, das durch die Zeilen und Spalten eines ortsauflösenden Flächensensors gebildet wird. Die Balken ermöglichen die Ausrichtung des Testbildes parallel zu den Zeilen und Spalten. Das Testbild soll dunkle Strukturelemente auf einem hellen Hintergrund enthalten.

Fig. 2 zeigt zwei getrennte Bereich 2a und 2b auf einem gemeinsamen Flächensensor. Die Ortsauflösung ist durch die in Zeilen und Spalten angeordneten lichtempfindlichen Pixelelemente gegeben, deren Lichtmenge in an sich bekannter Weise ausgelesen und einem Rechner zur Auswertung zugeleitet werden können. Die Begrenzungen der auf den beiden Sensorbereichen entstehenden Pupillenbilder sind durch einen Kreis dargestellt. Das Testbild ist zur Pupille so ausgerichtet, dass der zentrale Punkt im Zentrum des Pupillenbildes liegt. Die die Pupillenbilder auf die beiden Sensorbereiche 2a und 2b abbildenden, nicht weiter dargestellten optischen Elemente erzeugen im dargestellten Beispiel zueinander in der Höhe um drei Pixel verschobene Pupillenbilder. Selbstverständlich kann zusätzlich eine seitliche Verschiebung vorhanden sein. Die dargestellte Ablage der Ortskoordinaten wird in einem nicht flüchtigen Speicher als Kalibrationswert abgelegt. Bei allen Autofokusmessungen mit diesem Sensor sind daher die Zeilen auf dem Sensorbereich 2a mit den um drei Zeilen nach oben verschobenen Zeilen des Sensorbereichts 2b zu vergleichen.

Fig. 3 zeigt ebenfalls zwei nur in der Höhe um zwei Zeilen gegeneinander verschobene Pupillenbilder. Der für die Autofokusmessung genutzte Flächenbereich innerhalb der Pupillenbegrenzung ist als einbeschriebenes Quadrat gekennzeichnet.

Fig. 4 zeigt die gleiche Lage der Pupillenbilder wie in Fig. 3. Zur Autofokusmessung wird jedoch nur ein frei gewählter kleinerer Pixelbereich herangezogen. Dieser Bereich kann automatisch oder durch den Fotografen in einen stark strukturierten Objektbildbereich gelegt werden und führt dann zu einem schnelleren Phasenabgleich mit guter Fokusqualität.

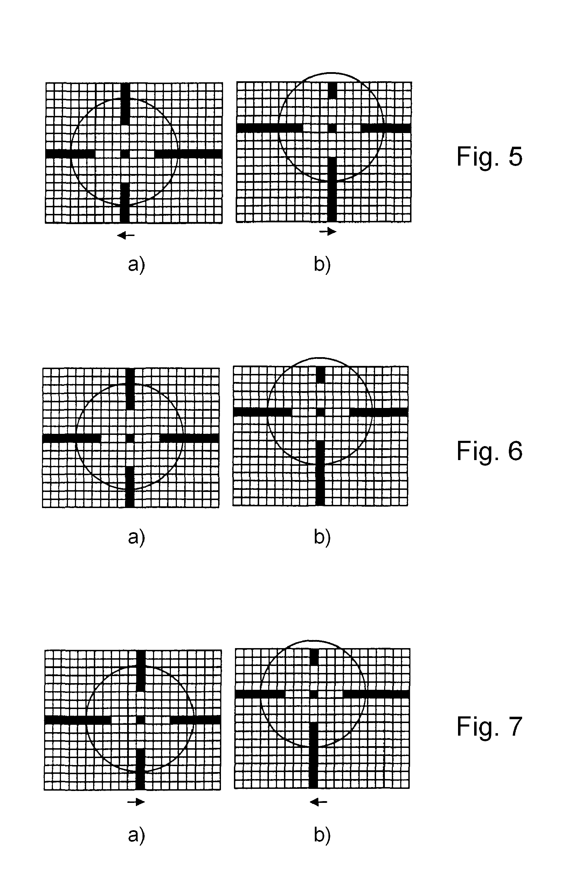

In den Fig. 5 bis 7 ist schematisch dargestellt, dass die Pupillenabbildung zusätzlich zu einer geometrisch abbildungstechnisch bedingten Bildverschiebung auch farbabhängig ist. Als Referenzdarstellung ist in Fig. 6 die Abbildung eines Testbildes mit einer Farbe aus dem grünen Lichtspektrum dargestellt, das mittig zum Empfindlichkeitsbereich des Flächensensors liegt. Die Ablage der beiden Pupillenbilder zueinander ist vergleichbar mit der in Fig. 2 dargestellten Dejustierung und zur vereinfachten Darstellung nur in einer Ablagerichtung dargestellt.

Bei einem Testbild in blauer Farbe zeigt Fig. 5 im linken Sensorbereich eine Verschiebung nach links und im rechten Sensorbereich eine Verschiebung des Pupillenbildes nach rechts. Bei einem in Fig. 7 verwendeten Testbild in roter Farbe sind die Pupillenbilder dagegen in entgegen gesetzter Richtung zueinander verschoben.

Die farbabhängigen Ablagewerte können ebenfalls gespeichert werden. Wenn dann bei einer Autofokusmessung auch die aktuell vorherrschende Lichtsituation im Objektraum ermittelt wird, können die zusätzlichen farbabhängigen Kompensationswerte bei der Zuordnung der Pixelwerte in den beiden Pupillenbildern berücksichtigt werden.

Selbstverständlich ist es auch möglich, aus den jeweils einem diskreten Lichtspektrum zugeordneten Ablagewerten eine kontinuierliche Ablagekurve zu berechnen, so dass auch für aktuell gemessene vorherrschende Farbspektren in Zwischenlagen die Zuordnung eines angepassten Ablagewertes möglich ist.

## Patentansprüche

1. Verfahren für eine Autofokuseinrichtung mit Pupillenteilung der Abbildung des Objektraumes und Phasendifferenzmessung an zwei auf einem ortsauflösenden fotoempfindlichen Flächensensor abgebildeten Pupillenbildern des Objektraumes, **dadurch gekennzeichnet, dass**
a) ein Testbild mit vorgegebener Anordnung von Bildpunkten nach Pupillenteilung auf getrennte Bildfelder eines gemeinsamen Flächensensors abgebildet wird,
b) die absoluten Ortskoordinaten der Bildpunkte des einen Pupillenbildes des Testbildes relativ zu den absoluten Ortskoordinaten gleicher Bildpunkte des anderen Pupillenbildes des Testbildes bestimmt werden und daraus
c) die relativen Ortskoordinaten-Abweichungen zwischen den Bildpunkten des einen Pupillenbildes des Testbildes und denen des anderen Pupillenbildes ermittelt und in einem nicht flüchtigen Speicher abgelegt werden und
d) zur Phasendifferenzmessung die Bildpunkte des Objektraumes auf dem Flächensensor des einen Pupillenbildes mit den nach Korrektur mit den gespeicherten Ortskoordinaten-Abweichungen ermittelten Bildpunkten auf dem Flächensensor des anderen Pupillenbildes verglichen werden.

2. Verfahren nach Anspruch 1, **dadurch gekennzeichnet, dass** aus den ermittelten Ortskoordinaten-Abweichungen ein gemittelter Verschiebevektor für die Verlagerung der beiden Pupillenbilder des Objektraumes zueinander auf den Flächensensoren ermittelt und abgelegt wird.

3. Verfahren nach Anspruch 1, **dadurch gekennzeichnet, dass** ein Testbild mit fünf Bildpunkten gewählt wird.

4. Verfahren nach Anspruch 1 oder 2, **dadurch gekennzeichnet, dass** mehrere Testbilder mit jeweils einer Farbe verwendet werden und die Ortskoordinaten-Abweichungen gleicher Bildpunkte des jeweiligen Testbildes in Abhängigkeit von der Farbe bestimmt und in einem nicht flüchtigen Speicher abgelegt werden.

5. Verfahren nach Anspruch 4, **dadurch gekennzeichnet, dass** aus den Ortskoordinaten-Abweichungen zu den diskreten Farben durch Interpolation eine kontinuierliche Kurve der Ortskoordinaten-Abweichungen über die Farbe berechnet und abgelegt wird.

6. Verfahren nach Anspruch 5, **dadurch gekennzeichnet dass**
a) die mittlere Farbe im Objektraum gemessen wird,
b) die der mittleren Farbe zugehörige Ortskoordinaten-Abweichung aus dem Speicher ausgelesen wird und
c) für die nach Korrektur der Bildpunkte des einen Flächensensors mit dieser Ortskoordinaten-Abweichung ermittelten Bildpunkte des anderen Flächensensensors die Phasendifferenzmessung durchgeführt wird.

7. Verfahren nach Anspruch 5, **dadurch gekennzeichnet, dass**
a) für jeden Bildpunkt des Objektraumes auf dem Flächensensor des einen Pupillenbildes die Farbe bestimmt wird,
b) die zur Farbe zugehörige Ortskoordinaten-Abweichung aus dem Speicher ausgelesen wird,
c) der nach Korrektur mit der zugehörigen Ortskoordinaten-Abweichung zugehörige Bildpunkt des Objektraumes auf dem Flächensensor des anderen Pupillenbildes bestimmt wird und
d) für diese Bildpunkte die Phasendifferenzmessung durchgeführt wird.

8. Verfahren nach Anspruch 1, **dadurch gekennzeichnet, dass** für die Phasendifferenzmessung Teilbereiche der Pupillenbilder nach Größe und/oder Lage auf dem Flächensensor ausgewählt werden.
